**Europäisches Patentamt**

**European Patent Office**

**Office européen des brevets**

(19)

(11) Veröffentlichungsnummer: **0 216 252**
**B1**

# EUROPÄISCHE PATENTSCHRIFT

(12)

(45) Veröffentlichungstag der Patentschrift:
05.09.90

(51) Int. Cl.⁵: **H02K 5/173**

(21) Anmeldenummer: **86112518.5**

(22) Anmeldetag: **10.09.86**

(54) **Lagerflansch für einen einseitig und axial verspannt gelagerten Aussenläufermotor.**

(30) Priorität: **23.09.85 DE 8527127 U**

(43) Veröffentlichungstag der Anmeldung:
**01.04.87 Patentblatt 87/14**

(45) Bekanntmachung des Hinweises auf die Patenterteilung:
**05.09.90 Patentblatt 90/36**

(84) Benannte Vertragsstaaten:
**AT DE FR GB IT NL**

(56) Entgegenhaltungen:
**DE-A- 3 300 574**
**DE-U- 8 221 291**

(73) Patentinhaber: **Siemens Aktiengesellschaft,
Wittelsbacherplatz 2, D-8000 München 2(DE)**

(72) Erfinder: **Schmidt, Helmut, Unterer Weinberg 44,
D-8701 Reichenberg(DE)**
Erfinder: **Hähnel, Peter, Brahmsstrasse 27,
D-8508 Wendelstein(DE)**

**Beschreibung**

Die Erfindung bezieht sich auf einen Lagerflansch gemäß Oberbegriff des Anspruchs 1; ein derartiger Lagerflansch ist durch eine offenkundige Vorbenutzung bekannt.

Um den Lagerflansch beim Eindrücken seines Festlagers in die Lagerbohrung an seinem einen Ende gegen die axiale Druckkraft abstützen zu können, könnte man versuchen, eine Abstützvorrichtung am anderen Ende des Lagerflansches etwa in gleicher Wirkungslinie wie die axiale Druckkraft anzusetzen. Wollte man andererseits unbedingt das anzutreibende Gerät erst nach dem Anbau des komplettierten elektrischen Statorteils auf dem einen Ende des Lagerflansches montieren, so wäre die Abstützung gegen die axiale Druckkraft allenfalls in einem Lagerflanschteil unterhalb des Statorblechpaketes möglich.

Der Erfindung liegt daher die Aufgabe zugrunde, eine Möglichkeit zu schaffen, daß einerseits der Lagerflansch vor seinem Zusammenbau mit dem von dem Außenläufer anzutreibenden Gerät motorseitig weitestgehendst, insbesondere hinsichtlich des Statoraufbaus und der elektrischen Verschaltung der Statorwicklung, komplettiert und andererseits seine Baugröße möglichst klein gehalten werden kann.

Die Lösung der vorgenannten Aufgabe gelingt bei einem Lagerflansch der eingangs genannten Art durch die Lehre des Anspruchs 1; vorteilhafte Ausgestaltungen der Erfindung sind jeweils Gegenstand der Unteransprüche.

Durch die erfindungsgemäß im Bereich der Lagerbohrung vorgesehene Ausnehmung kann die Reaktionskraft zu der axialen Druckkraft bei dem Einschieben der Rotorwelle in die Lagerbohrung des Lagerflansches in einfacher Weise an einer Stelle erfolgen, an der eine Behinderung des Statoranbaus an den Lagerflansch vermieden und Biegemomentenbelastungen, die bei einem axialen Abstützen unterhalb der montierten Statorblechpaketes insbesondere im dünnwandigen, radial stufenförmigen Übergangsbereich zwischen Lagebohrungsteil und Statorteil auftreten würden, von dem Lagerflansch weitgehend ferngehalten werden können; als Abstützausnehmung ist nach einer Ausgestaltung der Erfindung in fertigungstechnisch und trotzdem hinsichtlich der Kraftaufnahme besonders wirkungsvollen Weise eine umlaufende Nut in den Außenumfang des Lagerflansches eingeformt. Zur Abstützung werden nach einer Ausgestaltung der Erfindung zwei Abstütz-Halbscheiben radial in die umlaufende Nut formschlüssig eingesteckt. Da die erfindungsgemäß vorgesehene umlaufende Nut als Abstützung gegenüber der axialen Druckkraft im Bereich der Lagerbohrung und somit im Bereich des freien Endes des Lagerflansches vorgesehen ist, kann in vorteilhafter Weise zwischen der umlaufenden Nut und dem am anderen Ende des Lagerflansches aufgebauten Stator noch ein im wesentlichen in der Schwerpunktslage der gesamten Anordnung liegender radialer Befestigungsflansch befestigt werden.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:

Fig. 1 einen axialen Längsschnitt durch einen zum Antrieb einer Plattenspindel eines Plattenspeicherantriebs vorgesehenen Außenläufermotor;

Fig. 2 eine vergrößerte Detaildarstellung aus Fig.1 im Bereich der in den Lagerflansch eingedrückten beiden Kugellager;

Fig. 3 eine außen am Lagerflansch angreifende, den Lagerflansch vor übermäßiger Belastung beim Eindrücken der Kugellager entlastende Abstützvorrichtung.

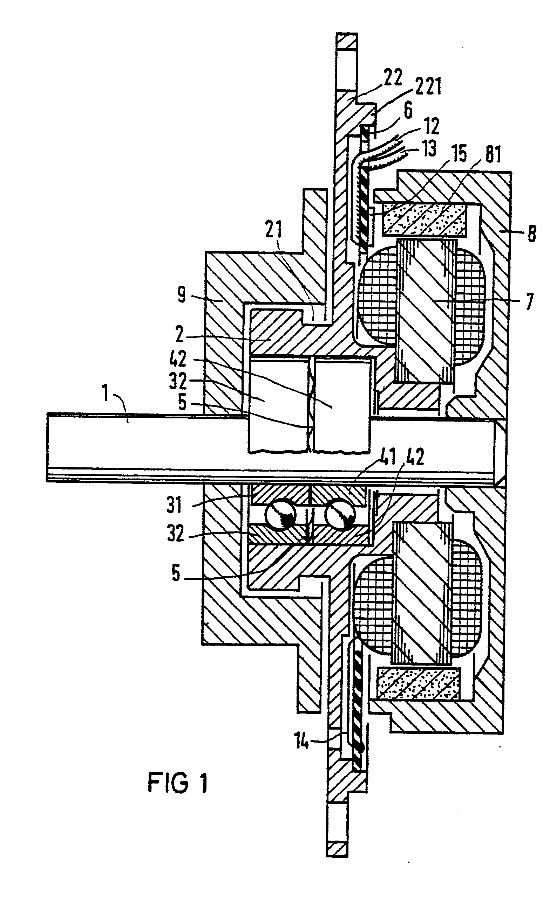

Fig.1 zeigt in einem axialen Längsschnitt einen Außenläufermotor, der eine Plattenspindel 9 eines Plattenspeichers antreibt und über einen an seinem Lagerflansch 2 angeformten Befestigungsflansch 22 in einem Datenverarbeitungsgerät einbaubar ist; der Lagerflansch 2 dient dabei mittel- bzw. unmittelbar als tragendes Bauteil für sämtliche in den Zeichnungen dargestellten Bauteile.

Auf das rechte Ende des Lagerflansches 2 ist zunächst ein bewickeltes Statorblechpaket 7 aufgedrückt. Im linken, axialen vor dem bewickelten Statorblechpaket 7 liegenden Teil des Lagerflansches 2 ist eine Lagerbohrung eingelassen, in die zwei Kugellager 3,4 unter Zwischenlage einer Federscheibe 5 von der linken offenen Stirnseite der Lagerbohrung her eingeschoben sind. In den Kugellagern 3,4 ist eine Rotorwelle 1 gelagert, auf deren linkes Ende die Plattenspindel 9 und auf deren rechtes Ende eine Läuferglocke 8 des Außenläufermotors aufgedrückt ist, an deren radial äußeren Enden Magnetschalen 81 zur Bildung des Erregerfeldes des Außenläufermotors gehalten sind.

An der dem bewickelten Stator zugewandten Stirnseite des Befestigungsflansches 22 ist innerhalb eines axial vorstehenden umlaufenden Randes 221 eine Leiterplatte 6 gehalten, auf der u.a. den betriebsmäßig rotierenden Dauermagnetschalen 81 zugeordnete und daher stirnseitig benachbart angeordnete Hallwandler 15 gehalten sind. An die Leiterbahnen der an ihrer Vorder- und ihrer Rückseite kaschierten Leiterplatte 6 sind außerdem Versorgungs- und Signalspannungsleitungen 12 sowie äußere Wicklungsspeiseleitungen 13 für die Spulenwicklungsenden 14 der im Statorblechpaket 7 eingebrachten Statorwicklung kontaktiert.

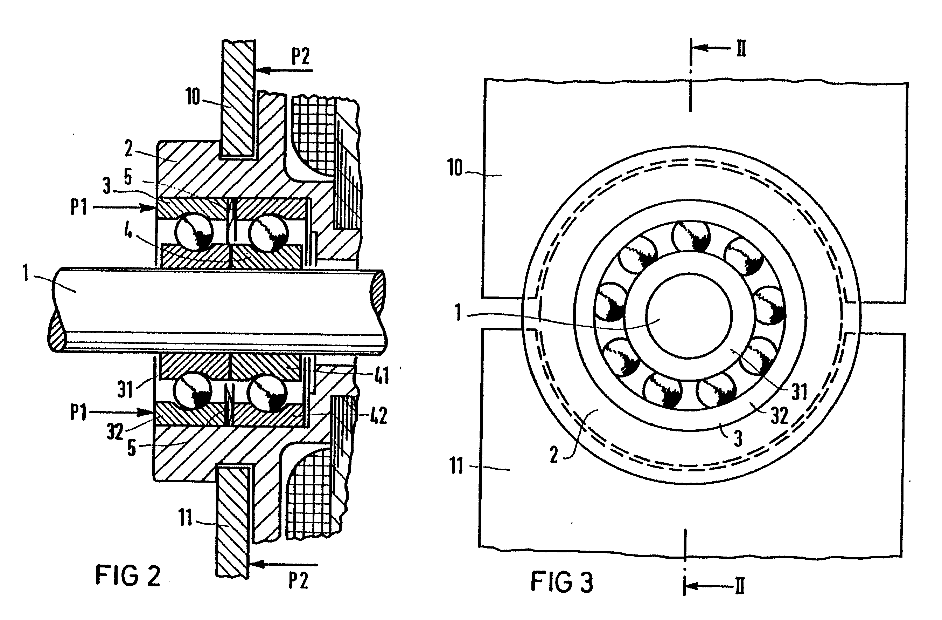

Die erfindungsgemäße Lagerung der Rotorwelle 1 über die beiden axial hintereinander axial angeordneten Kugellager 3,4 in einer zu dem einen Ende des Lagerflansches 2 stirnseitig offenen Lagerbohrung wird im folgenden anhand von Fig.2 näher beschrieben.

Die beiden Kugellager 3,4 liegen mit ihren Innenringen 31,41 axial unmittelbar aneinander. Die Außenringe 32,42 werden durch eine zwischengelegte Federscheibe 5 axial derart vorgespannt, daß sich die aus Fig.2 ersichtliche Verteilung des jeweiligen Spiels zwischen Außenring und Kugelring bzw. Innenring ergibt, wobei zweckmäßigerweise das der offenen Stirnseite der Lagerbohrung nächstliegende Kugellager 3 als Festlager mit einem Preßsitz sowohl zwischen dessen Innenring 31 zur Rotorwelle 1 als auch zwischen dessen Außenring 32 zur Lagerbohrung und jeweils nur der gegen die Wellfederscheibe 5 anliegende Außenring 42 des zweiten Kugellagers 4 als Schiebesitz zur Lagerbohrung ausgebildet ist; der Innenring des zweiten Kugellagers 4 ist ebenfalls als Preßsitz auf der Rotorwelle 1 gehalten.

Durch die erfindungsgemäße Anordnung können also die beiden Kugellager 3,4 auf kürzester axialer Länge in die Lagerbohrung des Lagerflansches 2 in einem Arbeitsgang eingedrückt und im Vergleich zu bekannten Anordnungen auf ein weiteres Federelement und eine Zwischenlegscheibe verzichtet werden. Das bei üblichen Kugellagern vorhandene Spiel erlaubt, daß einerseits bei unmittelbar axial aneinanderliegenden Innenringen beim Aufdrücken der beiden Kugellager in die Lagerbohrung einerseits die Federscheibe nicht durch zu starke Pressung beschädigt wird und andererseits die Federkraft der Federscheibe ausreicht, um betriebsmäßig die Außenringe hinreichend axial gegeneinander verspannen zu können.

Um einerseits vor dem Einbringen der Kugellager 3,4 bereits den Lagerflansch 2 an seinem rechten Ende mit dem bewickelten Statorblechpaket 7 bestücken und die Statorwicklung an die in den Befestigungsflansch gehaltene Leiterplatte voll anschließen zu können und andererseits den Lagerflansch beschädigungsfrei, insbesondere im Bereich seines dünnwandigen Übergangs von der Lagerbohrung zum Statoraufnahmeteil bei dem Eindrücken der beiden Kugellager 3,4, abstützen zu können, ist in vorteilhafter Weise am Außenumfang des Lagerflansches 2 eine Ausnehmung für eine Abstützung gegenüber der axialen Druckkraft, mit der die Kugellager 3,4 in den Lagerflansch 2 eingedrückt werden, vorgesehen, wobei zweckmäßigerweise die Ausnehmung im Lagerflanschbereich zwischen der stirnseitigen Öffnung an dem einen Ende der Lagerbohrung und dem angeformten Befestigungsflansch 22 angeordnet und als Abstützungsvorrichtung eine umlaufende Nut 21 in die Umfangsfläche des Lagerflansches 2 eingeformt ist. In die umlaufende Nut 21 sind zwei Halbscheiben 10,11 radial einsteckbar, die die Reaktionskräfte P2 zu den Druckkräften P1 aufnehmen können, mit denen die Kugellager 3,4 mit der eingepreßten Rotorwelle 1 über den Außenring 32 in die Lagerbohrung des Lagerflansches 2 eingedrückt werden.

Es ist ersichtlich, daß durch die erfindungsgemäße Abstützvorrichtung einerseits die Reaktionskräfte in einem dickwandigen Teil des Lagerflansches aufgenommen und somit zu starke Biegebeanspruchungen von verformungsgefährdeten Teilen des Lagerflansches ferngehalten werden und daß andererseits der rechts von der Abstützvorrichtung liegende Teil des Lagerflansches unbehindert für eine Vormontage des Stators bzw. einer Leiterplatte zur Verfügung steht, da von dieser Seite eine axiale Abstützung gegenüber der Druckkraft für die Kugellager nicht angesetzt werden braucht.

## Patentansprüche

1. Lagerflansch (2), insbesondere für einen einseitig und axial verspannt gelagerten Außenläufermotor, mit von seinem einen axialen Ende her in eine Lagerbohrung mit einer axialen Druckkraft einzuschiebendem Rotorlager (3, 4) und mit an seinem anderen axialen Ende aufzunehmendem Stator **(7), dadurch gekennzeichnet**, daß im Bereich der Lagerbohrung am Außenumfang des Lagerflansches (2) eine Ausnehmung (Nut 21) für eine Abstützung gegenüber der axialen Druckkraft vorgesehen ist.

2. Lagerflansch nach Anspruch 1, **dadurch gekennzeichnet**, daß als Abstützausnehmung eine umlaufende Nut (21) am Außenumfang des Lagerflansches (2) angeformt ist.

3. Lagerflansch nach Anspruch 2, **dadurch gekennzeichnet**, daß in die am Außenumfang des Lagerflansches (2) umlaufende Nut (21) radial zwei Abstütz-Halbscheiben (10,11) eingesteckt sind.

4. Lagerflansch nach zumindest einem der Ansprüche 1-3, **dadurch gekennzeichnet**, daß die Abstützausnehmung (Nut 21) zwischen dem einen Ende des Lagerflansches (2) und einem vor dem Stator (7) am Lagerflansch (2) angeformten Befestigungsflansch (22) angeordnet ist.

5. Lagerflansch nach Anspruch 4, **dadurch gekennzeichnet**, daß an dem Befestigungsflansch an seiner der Abstützausnehmung (Nut 21) abgewandten Stirnseite eine Leiterplatte (6) angeordnet ist.

## Claims

1. Bearing flange (2), more particularly for an external-rotor motor mounted unilaterally and in an axially braced manner, with rotor bearing (3, 4) to be inserted from its one axial end into a bearing borehole with an axial pressure force, and with stator (7) to be incorporated at its other axial end, characterized in that in the region of the bearing bore-hole on the outer circumference of the bearing flange (2) there is provided a recess (groove 21) for a support relative to the axial pressure force.

2. Bearing flange according to claim 1, characterized in that a circulating groove (21) is integrally moulded on the outer circumference of the bearing flange (2) as a supporting recess.

3. Bearing flange according to claim 2, characterized in that two supporting half-disks (10, 11) are radially inserted into the groove (21) circulating on the outer circumference of the bearing flange (2).

4. Bearing flange according to at least one of claims 1 to 3, characterized in that the supporting recess (groove 21) is arranged between the one end of the bearing flange (2) and a fastening flange (22) integrally moulded on the bearing flange (2) in front of the stator (7).

5. Bearing flange according to claims 4, characterized in that a circuit board (6) is arranged on the fastening flange on its fornt side directed away from the supporting recess (groove 21).

## Revendications

1. Flasque de palier (2), en particulier pour un moteur à rotor extérieur monté unilatéralement et axialement bloqué, avec un palier de rotor (3, 4) à introduire avec une force de pression axiale dans un perçage de palier, à partir de sa première extrémité axiale, et avec un stator (7) à recevoir à sa seconde extrémité axiale, caractérisé par le fait que dans la zone du perçage de palier, à la périphérie du flasque de palier (2), il est prévu une cavité (gorge 21) pour un appui pour la force de pression axiale.

2. Flasque de palier selon la revendication 1, caractérisé qu'au titre de cavité d'appui, une gorge périphérique (21) est conformée sur la périphérie extérieure du flasque de palier (2).

3. Flasque de palier selon la revendication 2, caractérisé par le fait que dans la gorge périphérique (21) ménagée dans la périphérie extérieur du flasque de palier (2), sont enfichés radialement deux demi-disques d'appui (10, 11).

4. Flasque de palier selon au moins l'une des revendications 1–3, caractérisé par le fait que la cavité d'appui (gorge 21) est disposée entre la première extrémité du flasque de palier (2) et un flasque de fixation (22) conformé dans le flasque de palier (2), à l'avant du stator (7).

5. Flasque de palier selon la revendication 4, caractérisé par le fait que sur le flasque de fixation, et sur sa face frontale qui est éloignée de la cavité d'appui (gorge 21), est disposée une plaquette à circuits imprimés (6).

FIG 1

FIG 3

FIG 2